# EUROPEAN PATENT SPECIFICATION

(11) **EP 4 334 103 B1**
(45) Date of publication and mention of the grant of the patent: **21.01.2026**
(21) Application number: 22720182.9
(22) Date of filing: 09.04.2022
(51) Int. Cl.: B29C 45/14, B29C 67/00

(54) **FORMING COMPLEX GEOMETRIES USING INSERT MOLDING**
FORMEN KOMPLEXER GEOMETRIEN MITTELS UMSPRITZEN VON EINLEGETEILEN
FABRICATION DE GEOMETRIE COMPLEX AVEC SURMOULAGE D'INSERT

(30) Priority: 07.05.2021 US 202163186004 P; 09.08.2021 US 202117444730
(43) Date of publication of application: 13.03.2024
(73) Proprietor: Microsoft Technology Licensing, LLC, Redmond, WA 98052-6399 (US)
(72) Inventor: ALDANA, Leonardo, Redmond, Washington 98052-6399 (US); LOURIS, Michael James, Redmond, Washington 98052-6399 (US)
(74) Representative: Goddar, Heinz J.
(86) International application number: PCT/US2022/024156
(87) International publication number: WO 2022/235393

(56) References cited:
- EP-A1- 3 438 786
- EP-A1- 3 613 551
- WO-A1-02/42056
- DE-C1- 19 923 725
- US-A1- 2007 224 864
- US-A1- 2008 017 304
- US-A1- 2009 017 242
- US-A1- 2010 147 482
- US-A1- 2015 202 841
- US-A1- 2019 160 717

## Description

### BACKGROUND

In an injection molding process, a molded article is made by injecting a softened material into a mold and then hardening the material in the mold.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

EP 3 438 786 A1 discloses a method according to the preamble of claim 1. US 2015/202841 A1 discloses a similar method.

Examples are disclosed that relate to insert molding an article having complex undercuts and/or variations in wall thickness. The present invention provides a method of forming an injection molded article according to claim 1.

The dependent claims relate to special embodiments thereof.

### BRIEF DESCRIPTION OF THE DRAWINGS

FIG. 1 shows an example wearable device that includes an example molded article.
FIG. 2 shows the molded article of the device of FIG. 1.
FIG. 3 shows an exploded view of the molded article of FIG. 2 prior to machining, with example insert pieces shown separately from an overmolded portion.
FIG. 4 shows the molded article of FIG. 2 prior to machining, with the insert pieces in place relative to the overmolded portion.
FIG. 5 shows a partially cut-away view of the molded article of FIG. 2.
FIG. 6 shows a close-up partially cut-away view of the molded article of FIG. 2, and illustrates an insert overmolded within the molded article.
FIGS. 7 and 8 show views of example inserts having guide features.
FIG. 9 shows a flow diagram illustrating an example method of injection molding an article.
FIG. 10 shows flow diagram illustrating another example method of injection molding an article.

### DETAILED DESCRIPTION

Injection molding of complex parts can pose various challenges. For example, complex parts may include undercut regions, which are regions that block removal of a molded part from a mold. To allow the molding of undercut parts, molds can include sliders and/or other moveable parts that allow a blocking surface of the mold to be moved out of the way of the undercut portion of the part. Such moveable parts also may be referred to as tool actions. However, some undercuts may be difficult to accommodate via such tool actions.

As another difficulty, a polymer used in injection molding may shrink substantially as it hardens in a mold. For parts with varying thicknesses, such shrinking can cause warpage of the part in regions where relatively thinner portions meet relatively thicker portions, if the differences in thickness are too great. As such, it may be advantageous to design the molded part with a similar wall thickness all over. However, designing a part to have a consistent nominal wall thickness may in some cases be difficult. For example, some molded parts have ribs to reduce warpage along a long wall, or bosses to receive screws or other fasteners, which may have relatively thicker walls. In contrast, other portions of walls may be reduced in thickness because of space limitations, functionality requirements, and/or cosmetic considerations. In some cases, in order to achieve a desired functionality and appearance, such as two walls that are very close to each other, a thin steel piece may be inserted between the two walls to maintain the desired shape of the walls during the molding process. However, the steel piece may result in a hot spot that can pose problems during cooling.

Accordingly, examples are disclosed herein that relate to forming injection molded articles having complex geometries with undercuts and/or differing wall thicknesses by the use of insert molding followed by machining. Insert molding is a technique used to form molded articles by inserting preformed parts into a mold, such that the preformed parts are overmolded during injection molding, and thereby incorporated into the final molded article. As described in more detail below, an insert piece with a first, greater thickness is molded separately from a final injection molded article. The insert piece is incorporated into the molded article by insert molding after it has cooled and undergone shrinkage. During insert molding, hot resin is overmolded around the insert without causing the bulk of the insert to substantially soften and expand. In this manner, thicker regions of an injection molded article can be formed without experiencing the shrinkage and warpage effects that the achieved wall thickness may have if molded via a single tool. Then, machining is used to remove sacrificial material from the insert to create a desired wall profile, such as to create undercut features that are difficult or not possible to form using tool actions. In some examples, a same polymer material may be used for the insert and the overmolding material. Using the same resin for the insert and the overmolded part provides for bonding compatibility between the layers of resin, enabling a thermal and mechanical bond between the two components in the final molded article.

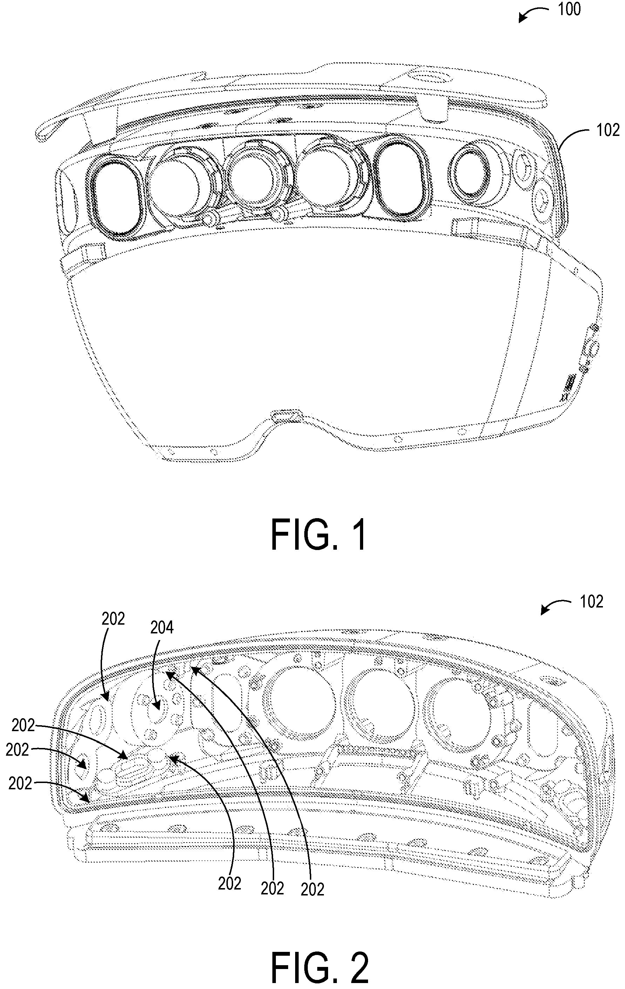

FIG. 1 shows an example wearable device 100 that includes an injection molded article 102 as a component. Wearable device 100 takes the form of a head-mounted display device, and injection molded article 102 is configured to support various sensors, some of which are schematically shown. Molded article 102 may help to isolate and protect internal components from environmental elements and from damage during transportation, use and handling. Molded article 102 further may provide access to the internal components for assembly, rework and service, provide a platform for optical alignment between sensors and displays, provide structures to mount other devices, dissipate heat from internal components, and/or perform other functions. Molded article 102 also may be configured to meet certain test requirements, e.g. to provide a sufficient barrier to moisture, and to meet drop and thermal tests.

In view of these diverse considerations, molded article 102 has a complex design with widely varying thicknesses and undercut structures that pose challenges for molding. FIG. 2 shows molded article 102 in more detail. As indicated by arrows including arrow 202, molded article 102 includes various undercuts to provide for certain functions of the resulting product. The undercuts may help to maintain a relatively small size for the molded article 102. However, the depicted undercuts are difficult to form with tool-actions alone. Molded article 102 also includes walls of varying thicknesses, such as where windows for sensors are formed, e.g. at 204. As mentioned above, such varying thicknesses can cause warpage, deformation and sink marks of the molded article in regions where relatively thinner portions meet relatively thicker portions, due to shrinkage during the molding process.

Thus, as mentioned above, one or more inserts may be molded into the molded article 102 during injection molding. The inserts can be used to provide sacrificial material from which the undercuts and/or other structures can be machined after molding. Forming the thicker sacrificial material by separate molding of the insert piece, instead of forming the thicker structure in a same mold process as the thinner portions of the molded article, helps to prevent warpage caused by shrinkage of the thicker structure. Further, an insert can be shaped to allow the molded article to be readily removed from a mold prior to machining structures that would be difficult undercuts during molding. Also, an insert can be formed from a same material as the overmolding material, allowing the structures to fuse during injection molding of the overmolding material, thereby forming a robust combined structure for machining.

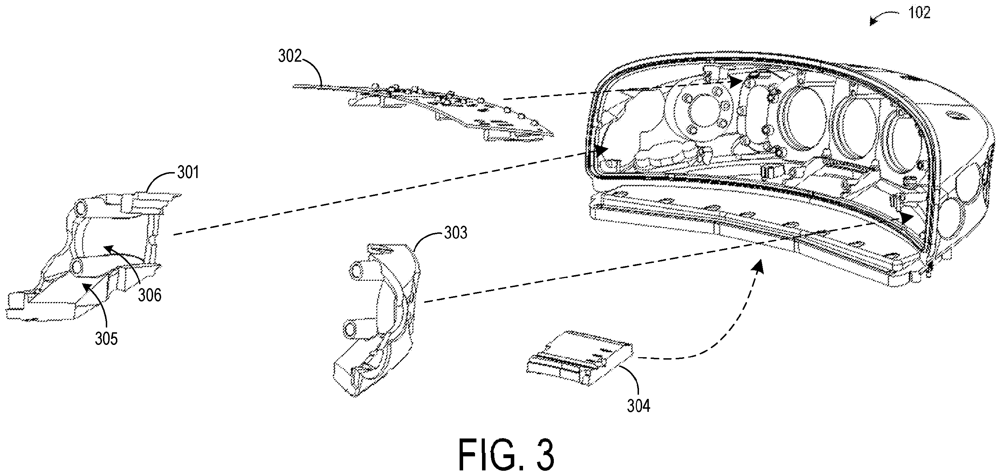

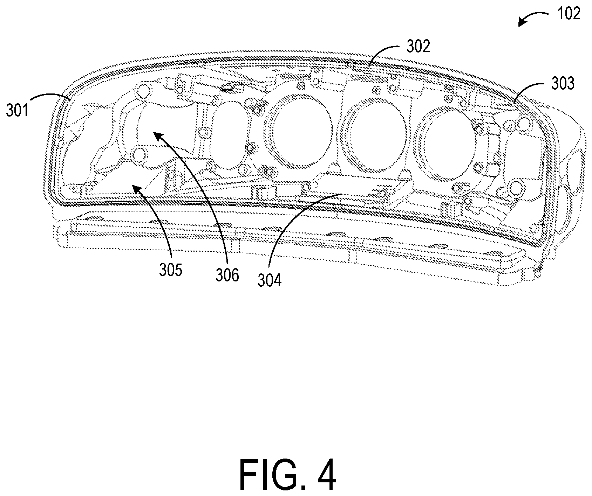

FIG. 3 shows an exploded view of molded article 102, illustrating inserts prior to being machined into final form, and FIG. 4 an unexploded view of molded article 102, also illustrating inserts prior to machining. Insert 301 and insert 303 are relatively thick molded structures that include sacrificial material (e.g. in region 305) for the machining of undercut structures 202, as well as for the formation of relatively thicker mounts for sensors are formed (e.g. in region 306). As can be seen in FIG. 4, the inserts 301, 303 do not have the undercuts 202, and thus allow molded article 102 to be readily removed from an injection mold. Other inserts also may be included in the injection molding process. For example, insert 302 is a sheet metal piece that is positioned at a top of the molded article 102, and insert 304 is a bracket positioned at a bottom of the molded article 102.

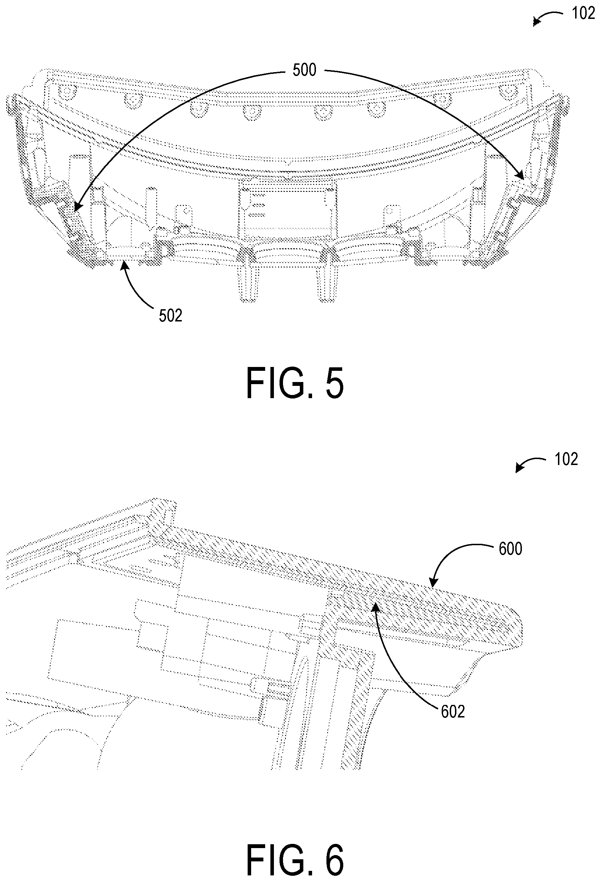

FIG. 5 shows a sectional view of molded article 102. As mentioned above, molded article 102 has relatively thick wall cross-sections at 500 provided by insert 301 and insert 303 to provide sacrificial material suitable for machining. The molded article 102 also has relatively thin, nominal wall thickness areas, such as area 502, adjacent to the thicker regions. By forming inserts 301 and 303 in a separate molding process, inserts 301 and 303 may avoid shrinkage during the overmolding process, and thus avoid warping relatively thinner wall areas adjacent to the inserts, such as area 502. After cooling, any sacrificial portions of the inserts may be machined to produce more detailed structures, such as undercuts.

FIG. 6 shows a magnified sectional view of molded article 102, with portions of an insert visible between overmolded walls 600 and 602. Here, the use of the insert in a relatively tight spot in a mold may help to avoid the use of a thin metal portion in the tool between closely spaced walls to form the structure, which can create unwanted hot spots in the cooling process, and weak and/or sharp steel conditions.

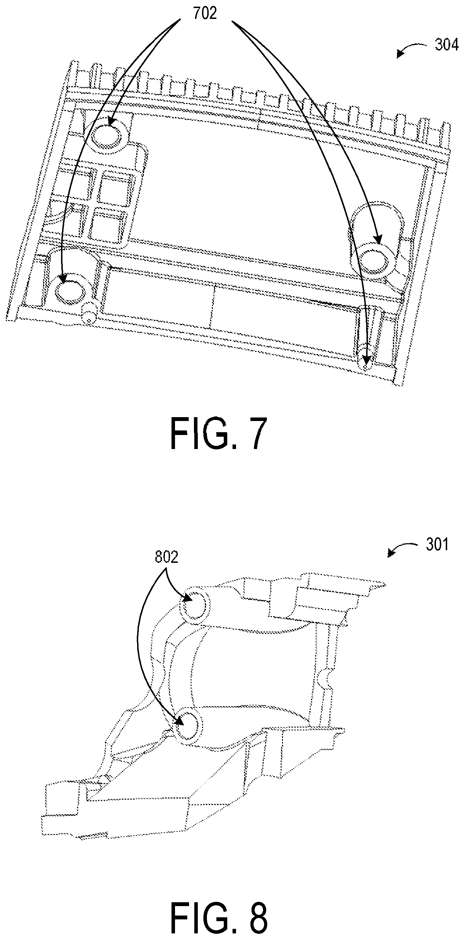

As mentioned above, after the insert molding process, the sacrificial material in molded article 102 provided by the inserts is then machined to create undercuts and other geometries. The molded article 102 may be machined using computer numerical control (CNC) milling, and/or using any other suitable machining process(es). In some examples, the inserts may include features that help with the machining process. FIGS. 7 and 8 respectively show more detailed views of example inserts 304 and 301, and illustrate features 702, 802 to guide a CNC machine during the machining process.

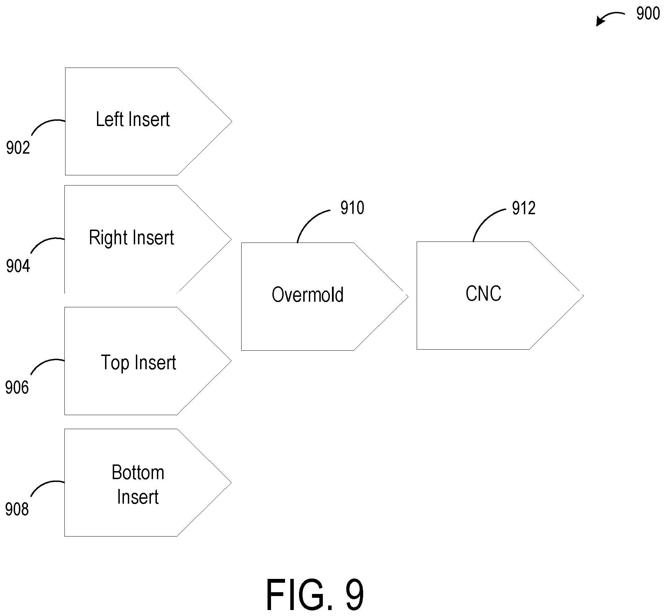

FIG. 9 shows a flow diagram illustrating an example method 900 of injection molding an article. Method 900 comprises individually forming inserts 902, 904, 906, and 908. As mentioned above, one or more inserts (e.g. those shown at 902 and 904) may be injection molded, and thus will undergo cooling and shrinkage. include sacrificial material that can be machined into more complex shapes in a later process. Next, at 910, the inserts are inserted into a mold for forming a molded article, and then resin is injected into the mold, thereby incorporating the previously molded inserts into the molded article. As described above, because one or more inserts were molded and cooled as a separate process (e.g. those shown at 902 and 904), the inserts may remain dimensionally stable during the insert molding process, thus helping to prevent unwanted shrinkage and warping of the molded article formed in the insert molding process. Further, in some examples, the same polymer material may be used for the inserts and the molded article, which may help to form a fused interface between the insert and the overmolding materials. Continuing, sacrificial materials on the inserts are then machined, at 912, to produce desired undercuts and/or other geometries. In some examples, such undercuts may otherwise not be achievable via traditional injection molding processes. This process also allows relatively thick walls to be produced in certain areas while keeping other walls relatively thin. In some examples, the inserts may include guide features to assist in the subsequent machining process, which may include CNC milling and/or any other suitable process.

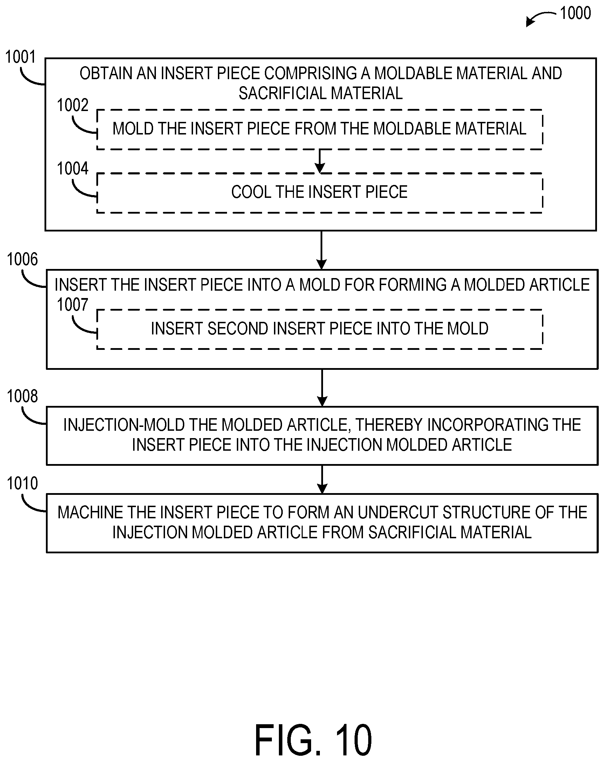

FIG. 10 shows a flowchart of another example method 1000 of injection molding an article. Method 1000 includes, at 1001, obtaining an insert piece comprising a moldable material and sacrificial material. This may include, at 1002, molding an insert piece from the moldable material, and at 1004, cooling the insert piece, allowing the insert piece to undergo shrinkage. In other examples, the insert piece may be machined or formed in any other suitable manner. Next, method 1000 includes, at 1006, inserting the insert piece into a mold for forming a molded article, and optionally at 1007, inserting a second insert piece into the mold, as well as any additional insert pieces. Any additional insert pieces may be inserted into the mold. Method 1000 further includes, at 1008, injection-molding the molded article, thereby incorporating the insert piece into the injection molded article. The insert piece may have a first, greater thickness, and may be incorporated into the injection molded article adjacent to portions of the injection molded article that have a second, lesser thickness. Method 1000 further includes, at 1010, machining the insert piece to form an undercut structure of the injection molded article from sacrificial material, and/or to form other structures. As described above, this may include CNC milling, and/or any other suitable machining process. In this manner, undercut structures that would be difficult to form using sliders can be formed by machining the sacrificial material from the insert. Further, by forming the insert in a second process, the thickness used for the sacrificial material and/or relatively thicker regions of the final molded article can be formed without risking warpage caused by forming the thicker and thinner structures in a same molding process.

Another example provides a method of forming an injection molded article comprising an undercut structure, the method comprising inserting an insert piece into a mold for forming the molded article, the insert piece comprising sacrificial material, injection-molding the molded article, thereby incorporating the insert piece into the injection molded article, and machining the insert piece to form the undercut structure from the sacrificial material. The insert piece may additionally or altematively include a first, greater thickness, and wherein the molded article comprises a portion adjacent to the insert piece having a second, lesser thickness than the first, greater thickness. Machining the insert piece may additionally or alternatively include CNC milling. The insert piece may additionally or alternatively include guide features for machining. The injection molded article may additionally or alternatively include a frame for a head-mounted device. The insert piece and the molded article may additionally or alternatively be formed from a same moldable material. Where the insert piece is a first insert piece, the method may additionally or alternatively include inserting a second insert piece into the mold for forming the molded article, and incorporating the second insert piece into the molded article. The insert piece and the molded article may additionally or alternatively be molded from a same material. The method includes molding the insert piece and cooling the insert piece prior to inserting the insert piece into the mold.

Another example provides a method of forming an injection molded article comprising features having different thicknesses, the method comprising obtaining an insert piece comprising a moldable material, the insert piece having a first, greater thickness, inserting the insert piece into a mold for forming the molded article, the molded article comprising a portion adjacent to the insert piece with a second, lesser thickness than the first, greater thickness, and injecting the moldable material into the mold, thereby bonding the insert piece to the portion adjacent to the insert piece. The insert piece may additionally or alternatively include sacrificial material, and the method may additionally or alternatively include machining the insert piece to form an undercut structure in the injection molded article from the sacrificial material. Machining the insert piece may additionally or alternatively include CNC milling. The injection molded article may additionally or alternatively include a frame for a head-mounted device. Where the insert piece is a first insert piece, the method may additionally or alternatively include inserting a second insert piece into the mold for forming the molded article, and incorporating the second insert piece into the molded article. The insert piece and the molded article may additionally or alternatively be formed from a same material. Obtaining the insert piece includes molding the insert piece and cooling the insert piece prior to inserting the insert piece into the mold.

Another example provides a method of forming a frame for a wearable device, comprising obtaining an insert piece comprising a moldable material, the insert piece having a first, greater thickness and comprising sacrificial material, inserting the insert piece into a mold for forming the molded frame, the molded frame comprising a portion adjacent to the insert piece with a second, lesser thickness than the first, greater thickness, injecting the moldable material into the mold, thereby incorporating the insert piece into the injection molded frame, and machining the insert piece to form an undercut structure of the injection molded frame from the sacrificial material. Where the insert piece is a first insert piece, the method may additionally or alternatively include molding a second insert piece from the moldable material and inserting the second insert piece into the mold to incorporate the second insert piece into the frame. The insert piece and the molded article may additionally or alternatively be formed from a same material. Obtaining the insert piece may additionally or alternatively include molding the insert piece and cooling the insert piece prior to inserting the insert piece into the mold.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all methods as defined by the appended claims.

## Claims

1. A method (1000) of forming an injection molded article (102) comprising an undercut structure (202)and/or differing wall thicknesses, the method comprising:
inserting (1006) an insert piece into a mold for forming the molded article (102), the insert piece comprising sacrificial material;
injection-molding (1008) the molded article (102), thereby incorporating the insert piece into the injection molded article; and
machining (1010) the insert piece to form the undercut structure and/or the differing wall thicknesses from the sacrificial material,
**characterized by** further comprising molding (1002) the insert piece and cooling (1004) the insert piece prior to inserting the insert piece into the mold.

2. The method (1000) of claim 1, wherein the insert piece comprises a first, greater thickness, and wherein the molded article (102) comprises a portion adjacent to the insert piece having a second, lesser thickness than the first, greater thickness.

3. The method (1000) of claim 1, wherein machining (1010) the insert piece comprises CNC milling.

4. The method (1000) of claim 1, wherein the insert piece comprises guide features for machining.

5. The method (1000) of claim 1, wherein the injection molded article (102) comprises a frame for a head-mounted display device.

6. The method (1000) of claim 1, wherein the insert piece and the molded article (102) are formed from a same moldable material.

7. The method (1000) of claim 1, wherein the insert piece is a first insert piece, and further comprising inserting (1007) a second insert piece into the mold for forming the molded article (102), and incorporating the second insert piece into the molded article (102).

8. The method (1000) of claim 1, wherein machining (1010) the insert piece comprises CNC milling.

## Patentansprüche

1. Verfahren (1000) zum Formen eines spritzgegossenen Artikels (102), der eine hinterschnittene Struktur (202) und/oder unterschiedliche Wanddicken umfasst, wobei das Verfahren Folgendes umfasst:
Einlegen (1006) eines Einlegestücks in eine Form zum Formen des gegossenen Artikels (102), wobei das Einlegestück Opfermaterial umfasst;
Spritzgießen (1008) des gegossenen Artikels (102), wodurch das Einlegestück in den spritzgegossenen Artikel integriert wird; und
maschinelles Bearbeiten (1010) des Einlegestücks, um die hinterschnittene Struktur und/oder die unterschiedlichen Wanddicken aus dem Opfermaterial zu formen,
**dadurch gekennzeichnet, dass** es ferner das Formen (1002) des Einlegestücks und das Kühlen (1004) des Einlegestücks vor dem Einlegen des Einlegestücks in die Form umfasst.

2. Verfahren (1000) nach Anspruch 1, wobei das Einlegestück eine erste, größere Dicke umfasst und wobei der gegossene Artikel (102) einen Abschnitt neben dem Einlegestück umfasst, der eine zweite, geringere Dicke als die erste, größere Dicke aufweist.

3. Verfahren (1000) nach Anspruch 1, wobei das maschinelle Bearbeiten (1010) des Einlegestücks CNC-Fräsen umfasst.

4. Verfahren (1000) nach Anspruch 1, wobei das Einlegestück Führungsmerkmale zum maschinellen Bearbeiten umfasst.

5. Verfahren (1000) nach Anspruch 1, wobei der spritzgegossene Artikel (102) einen Rahmen für eine am Kopf montierte Anzeigevorrichtung umfasst.

6. Verfahren (1000) nach Anspruch 1, wobei das Einlegestück und der gegossene Artikel (102) aus demselben gießbaren Material geformt sind.

7. Verfahren (1000) nach Anspruch 1, wobei das Einlegestück ein erstes Einlegestück ist, und ferner umfassend das Einlegen (1007) eines zweiten Einlegestücks in die Form zum Formen des gegossenen Artikels (102) und das Integrieren des zweiten Einlegestücks in den gegossenen Artikel (102).

8. Verfahren (1000) nach Anspruch 1, wobei das maschinelle Bearbeiten (1010) des Einlegestücks CNC-Fräsen umfasst.

## Revendications

1. Méthode (1000) de formation d'un article moulé par injection (102) comprenant une structure de contre-dépouille (202) et/ou des épaisseurs de paroi différentes, la méthode comprenant :
l'insertion (1006) d'une pièce rapportée dans un moule pour former l'article moulé (102), la pièce rapportée comprenant un matériau sacrificiel ;
le moulage par injection (1008) de l'article moulé (102), incorporant ainsi la pièce rapportée dans l'article moulé par injection ; et
l'usinage (1010) de la pièce rapportée pour former la structure de contre-dépouille et/ou les épaisseurs de paroi différentes à partir du matériau sacrificiel,
**caractérisée en outre en ce qu'**elle comprend le moulage (1002) de la pièce rapportée et le refroidissement (1004) de la pièce rapportée avant l'insertion de la pièce rapportée dans le moule.

2. Méthode (1000) selon la revendication 1, dans laquelle la pièce rapportée comprend une première épaisseur, plus importante, et dans laquelle l'article moulé (102) comprend une portion adjacente à la pièce rapportée ayant une deuxième épaisseur, moindre, par rapport à la première épaisseur plus importante.

3. Méthode (1000) selon la revendication 1, dans laquelle l'usinage (1010) de la pièce rapportée comprend un fraisage CNC.

4. Méthode (1000) selon la revendication 1, dans laquelle la pièce rapportée comprend des éléments de guidage pour l'usinage.

5. Méthode (1000) selon la revendication 1, dans laquelle l'article moulé par injection (102) comprend un cadre pour un dispositif d'affichage monté sur tête.

6. Méthode (1000) selon la revendication 1, dans laquelle la pièce rapportée et l'article moulé (102) sont formés à partir d'un même matériau moulable.

7. Méthode (1000) selon la revendication 1, dans laquelle la pièce rapportée est une première pièce rapportée, et comprenant en outre l'insertion (1007) d'une deuxième pièce rapportée dans le moule pour former l'article moulé (102), et l'incorporation de la deuxième pièce rapportée dans l'article moulé (102).

8. Méthode (1000) selon la revendication 1, dans laquelle l'usinage (1010) de la pièce rapportée comprend un fraisage CNC.
